(19) Europäisches Patentamt
European Patent Office
Office européen des brevets

(11) EP 4 464 731 A1

(12) **EUROPÄISCHE PATENTANMELDUNG**

(43) Veröffentlichungstag:
**20.11.2024 Patentblatt 2024/47**

(21) Anmeldenummer: **24174278.2**

(22) Anmeldetag: **06.05.2024**

(51) Internationale Patentklassifikation (IPC):
***C08G 18/24*** *(2006.01)* ***C08F 290/06*** *(2006.01)*
***C08G 18/32*** *(2006.01)* ***C08G 18/67*** *(2006.01)*
***C08G 18/73*** *(2006.01)* ***C08G 18/75*** *(2006.01)*
***C08G 18/80*** *(2006.01)* ***C08G 18/81*** *(2006.01)*
***A61C 7/00*** *(2006.01)* ***C08L 33/00*** *(2006.01)*
***C09J 133/00*** *(2006.01)* ***C09J 143/04*** *(2006.01)*

(52) Gemeinsame Patentklassifikation (CPC):
**C08G 18/246; A61C 7/00; C08F 290/067; C08G 18/3206; C08G 18/672; C08G 18/73; C08G 18/755; C08G 18/8016; C08G 18/8025; C08G 18/8116; C08G 18/8175; C08L 33/00; C09J 133/00; C09J 143/04**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **08.05.2023 DE 102023111898**

(71) Anmelder: **VOCO GmbH**
**27472 Cuxhaven (DE)**

(72) Erfinder:
- **Lamping, Sebastian**
  **48153 Münster (DE)**
- **Nordmann, Markus**
  **27472 Cuxhaven (DE)**
- **Oldenburger, Daniel**
  **27476 Cuxhaven (DE)**
- **Maletz, Reinhard**
  **27472 Cuxhaven (DE)**
- **Plaumann, Manfred Thomas**
  **27472 Cuxhaven (DE)**

(54) **SCHIENE AUS UNTERSCHIEDLICH ELASTISCHEN MATERIALIEN**

(57) Die vorliegende Erfindung betrifft eine dentale, duroplastische Schienenanordnung umfassend eine erste, äußere Schiene mit höherem Elastizitäsmodul und eine zweite, innere Schiene mit einem niedrigeren Elastiziätsmodul sowie Verfahren zur Herstellung einer solchen dentalen, duroplastischen Schienenanordnung. Solche duroplastischen Schienenanordnungen zeichnen sich durch einen hohen Tragekomfort bei gleichzeitig hoher Genauigkeit und guter Formstabilität aus.

EP 4 464 731 A1

## Beschreibung

Die vorliegende Erfindung betrifft eine dentale Schienenanordnung umfassend eine erste, äußere duroplastische Schiene mit höherem Elastizitäsmodul und eine zweite, innere Schiene mit einem niedrigeren Elastiziätsmodul sowie Verfahren zur Herstellung einer solchen dentalen Schienenanordnung.

Die Erfindung wird in den beigefügten Patentansprüchen definiert. Bevorzugte Aspekte der vorliegenden Erfindung ergeben sich überdies aus der nachfolgenden Beschreibung einschließlich der Beispiele.

Soweit für einen erfindungsgemäßen Aspekt (Zusammensetzung, Verfahren oder Verwendung) bestimmte Ausgestaltungen als bevorzugt bezeichnet werden, gelten die entsprechenden Ausführungen jeweils auch für die anderen Aspekte der vorliegenden Erfindung, *mutatis mutandis*. Bevorzugte individuelle Merkmale erfindungsgemäßer Aspekte (wie in den Ansprüchen definiert und/oder in der Beschreibung offenbart) sind miteinander kombinierbar und werden vorzugsweise miteinander kombiniert, sofern sich im Einzelfall für den Fachmann aus dem vorliegenden Text nichts anderes ergibt.

Dentale Schienen dienen als Schutzfunktion der Zähne bei Fehlbelastungen sowie zur Reduzierung der Beschwerden die durch ein nicht korrektes Zusammenspiel zwischen den Kiefergelenken und der Kaumuskulatur zu Stande kommen können. Neue Bewegungsmuster können eingestellt werden wodurch die Zahnsubstanzen geschützt und Kiefergelenksbeschwerden reduziert werden.

Dentale Schienen an sich sind seit langem bekannt. So werden z.B. thermoplastische Schienen durch Tiefziehverfahren hergestellt. Solche Schienen sind z.B. in US 3,768,164, US 4,798,534, US 5,692,894 und US 2005/0100853 A1 beschrieben.

Auch thermoplastische zweischichtige Schienen sind bekannt. So können sie aus zweischichtigen Tiefziehfolien hergestellt werden. Diese zweischichtigen Schienen bieten den Vorteil, dass die äußere, härtere Schicht für eine ausreichende Formstabilität sorgt, während die innere, weichere Schicht einem höheren Tragekomfort dient.

Solche Schienen sind z.B. in WO 2022/090940 A1, US 5,103,838, US 2001/0051256 A1, US 2009/0298006 A1, US 2013/0302742 A1, US 2016/0228215 A1, US 2020/0237478 A1, US 2020/0237480 A1, US 2020/0290262 A1, US 2021/0077225 A1, US 20210137642 A1, US 2021/0137643 A1 und EP 3 536 276 A1 beschrieben.

Nachteilig an diesen thermoplastischen Schienen ist, dass durch das Tiefziehen nur eine begrenzte Genauigkeit der Schiene erreicht werden kann.

Mit dem fortschreitenden Einzug der digitalen Zahnheilkunde werden vermehrt auch duroplastische Schienen in generativen Fertigungsverfahren wie 3D-Druck, Stereolithographie oder DLP-Verfahren hergestellt. Diese Verfahren führen zu einer deutlich höheren Genauigkeit bei der Herstellung als konventionelle Tiefziehverfahren.

Beispiele für solche Schienen sind z.B. in US 2020/0199268 A1, US 2020/0199346 A1 und US 2022/0041777 A1 beschrieben.

Nachteilig an diesen Schienen ist, dass sie einteilig hergestellt werden und sich die Vorteile von zweischichtigen, thermoplatischen Tiefziehschienen nicht übertragen lassen.

Es besteht also ein offenkundiger Bedarf an dentalen Schienen, die die Vorteile zweischichtiger thermoplastischer Schienen mit der Genauigkeit generativ hergestellter duroplastischer Schienen vereinen.

Ein der vorliegenden Erfindung zugrundeliegendes Ziel ist es, eine dentale Schienenanordnung bereitzustellen, die durch eine härtere, äußere Schicht und eine weichere, innere Schicht gleichzeitig Formstabilität und Tragekomfort bietet und dabei in einer höchstmöglichen Genauigkeit hergestellt werden kann.

Erfindungsgemäß wird nach einem ersten Aspekt eine dentale Schienenanordnung vorgeschlagen, wie sie in Anspruch 1 definiert ist, nämlich eine
Dentale Schienenanordnung umfassend

a) eine erste duroplastische Schiene (S-A) und

b) eine zweite Schiene (S-B) und

c) eine Klebstoffzusammensetzung (Z-C),

wobei die erste Schiene (S-A) eine Innenseite (S-A-IS) und eine Außenseite (S-A-AS) aufweist und wobei die zweite Schiene (S-B) eine Innenseite (S-B-IS) und eine Außenseite (S-B-AS) aufweist und wobei die Form der Innenseite (S-A-IS) der ersten Schiene der Form der Außenseite (S-B-AS) der zweiten Schiene entspricht und wobei die Klebstoffzusammensetzung (Z-C) die Innenseite (S-A-IS) der ersten Schiene (S-A) mit der Außenseite (S-B-AS) der zweiten Schiene (S-B) verklebt, dadurch gekennzeichnet, dass die erste Schiene (S-A) einen höheren Elastizitätsmodul aufweist als die zweite Schiene (S-B).

Um eine gute Formstabilität auf der einen Seite und einen hohen Tragekomfort auf der anderen Seite zu gewährleisten, liegt in einer bevorzugten Ausführungsform

der Elastizitätsmodul der ersten Schiene (S-A) im Bereich von 500 MPa bis 2500 MPa, bevorzugt im Bereich von 1000 MPa bis 2500 MPa, besonders bevorzugt im Bereich von 1000 MPa bis 2000 MPa,
und/oder (vorzugsweise "und")

der Elastizitätsmodul der zweiten Schiene S-B im Bereich von 0,2 MPa bis 100 MPa, bevorzugt im Bereich von 0,5 MPa bis 50 MPa, besonders bevorzugt im Bereich von 0,5 MPa bis 25 MPa, und/oder die Shore-A-Härte der zweiten Schiene (S-B) im Bereich von 10 bis 100, bevorzugt im Bereich von 20 bis 70, besonders bevorzugt im Bereich von 20 bis 50.

Erste duroplastische Schiene (S-A)

Die erste, äußere duroplastische Schiene einer erfindungsgemäßen Schienenanordnung lässt sich durch Polymerisation einer ersten Zusammensetzung (Z-A) herstellen. Vorzugsweise ist die erste Zusammensetzung (Z-A) eine (Meth)acryl-Zusammensetzung. Dabei wird im Rahmen der vorliegenden Anmeldung unter "(meth)acryl" sowohl "methacryl" als auch "acryl" verstanden.
Vorzugsweise erfolgt die Herstellung der ersten, duroplastischen Schiene in einem generativen Fertigungsverfahren, bevorzugt durch ein in der ISO/ASTM 52900:2015 unter "VAT Photopolymerization" beschriebenem Verfahren, besonders bevorzugt durch Stereolithographie (SLA) oder Digital Light Processing (DLP).
Die erste duroplastische Schiene (S-A) weist vorzugsweise einen Elastizitätsmodul im Bereich von 500 MPa bis 2500 MPa, bevorzugt im Bereich von 1000 MPa bis 2500 MPa, besonders bevorzugt im Bereich von 1000 MPa bis 2000 MPa auf.
Die erste duroplastische Schiene (S-A) wird durch Polymerisation einer ersten Zusammensetzung (Z-A) umfassend

Z-A-1) ein, zwei oder mehrere multifunktionelle Urethan(meth)acrylate,
Z-A-2) ein, zwei oder mehrere monofunktionelle (Meth)acrylate,
Z-A-3) ein, zwei oder mehrere multifunktionelle (Meth)acrylate ohne Urethangruppen,
Z-A-4) einen Photoinitiator oder ein Photoinitiatorsystem,
Z-A-5) ein, zwei oder mehrere Inhibitoren,
Z-A-6) optional Farbmittel und
Z-A-7) optional UV-Absorber erhalten.

Vorzugsweise wird die erste Schiene (S-A) durch Polymerisation einer ersten Zusammensetzung (Z-A) umfassend

Z-A-1) in einer Menge von 25 bis 75 Gew.-%, bevorzugt von 40 bis 70 Gew.-%,
Z-A-2) in einer Menge von 1 bis 20 Gew.-%, bevorzugt von 2 bis 15 Gew.-%,
Z-A-3) in einer Menge von 20 bis 60 Gew.-%, bevorzugt von 25 bis 50 Gew.-%,
Z-A-4) in einer Menge von 0,1 bis 5 Gew.-%, bevorzugt von 0,5 bis 3 Gew.-%,
Z-A-5) in einer Menge von 0,01 bis 1 Gew.-%, bevorzugt von 0,01 bis 0,1 Gew.-%,
Z-A-6) in einer Menge von 0 bis 1 Gew.-%, bevorzugt von 0,0001 bis 0,5 Gew.-%, und
Z-A-7) in einer Menge von 0 bis 1 Gew.-%, bevorzugt von 0,01 bis 0,5 Gew.-%, jeweils bezogen auf die Gesamtmasse der Zusammensetzung Z-A, erhalten.

Die Komponente Z-A-1 liegt in einer Menge von 25 bis 75 Gew.-%, bevorzugt von 40 bis 70 Gew.-%, bezogen auf die Gesamtmasse der Zusammensetzung Z-A vor. Vorzugsweise umfasst die Komponente Z-A-1 difunktionelles Urethan(meth)acrylat mit einem Molekulargewicht (MW) im Bereich von 400 bis 550 g/mol in einer Menge von 25 bis 100 Gew.-%, vorzugsweise 51 bis 100 Gew.-%, bevorzugt 60 bis 90 Gew.-%, besonders bevorzugt 75 bis 90 Gew.-%, und multifunktionelles, oligomeres Urethan(meth)acrylat mit einem Molekulargewischt (MW) > 650 g/mol in einer Menge von 0 bis 75 Gew.-%, vorzugsweise 0 bis 49 Gew.-%, bevorzugt 10 bis 40 Gew.-%, besonders bevorzugt 10 bis 25 Gew.-%, jeweils bezogen auf die Gesamtmasse von Z-A-1.
Das difunktionelle Urethan(meth)acrylat mit einem Molekulargewicht (MW) im Bereich von 400 bis 550 g/mol umfasst dabei vorzugsweise ein Urethan(meth)acrylat ausgewählt aus der Gruppe bestehend aus 3,14-Dioxa-4,13-dioxo-5,12-diazahexadecan-1,16-dioxydi(meth)acrylat, 7,7,9-Trimethyl-3,14-dioxa-4,13-dioxo-5,12-diazahexadecan-1,16-dioxydi(meth)acrylat, 7,9,9-Trimethyl-3,14-dioxa-4,13-dioxo-5,12-diazahexadecan-1,16-dioxydi(meth)acrylat,

1,5,5-Trimethyl-1-[(2-(meth)acryloyloxyethyl)carbamoylmethyl]-3-(2-(meth)acryloyloxyethyl)carbamoylcyclohexan (CAS 42405-01-6 Methacrylat; CAS 42404-50-2 Acrylat), 1,1'-[Methylenbis(4,1-phenyleniminocarbonyloxy-2,1-ethandiyl)]bis(meth)-acrylat (CAS 51243-61-9 Methacrylat; CAS 69790-08-5 Acrylat), 1,1'-[Methylenbis(2,1-phenyleniminocarbonyloxy-2,1-ethandiyl)]bis(meth)acrylat.

Das multifunktionelle, oligomere Urethan(meth)acrylat mit einem Molekulargewischt (MW) > 650 g/mol umfasst dabei vorzugsweise ein Urethan-Monomer ausgewählt aus der Gruppe bestehend aus $H_2C=C(R^1)-C(=O)-O-R^2-O-C(=O)-NH-R^3-NH-C(=O)-[O-R^4-O-C(=O)-NH-R^3-NH-C(=O)-]_nO-R^2-O-C(=O)-C(CR^1)=CH_2$ und $[H_2C=C(R^1)C(=O)-O-R^2-O-C(=O)-NH-R^3-NH-C(=O)-O-]_mR^5$, wobei

$R^1$ ein Wasserstoffatom oder eine Methylgruppe ist,
$R^2$ eine geradkettige oder verzweigte C2- bis C4-Alkylengruppe ist,
$R^3$ eine geradkettige, verzweigte und/oder cyclische C2- bis C15-Alkylen-, Arylen-, Arylalkylen- oder Alkylarylengruppe ist,
$R^4$ eine divalente organische Linkergruppe ist,
$R^5$ eine m-valente organische Linkergruppe ist,
n eine ganze Zahl von 0 bis 6 ist und
m eine ganze Zahl von 3 bis 6 ist.

In einer bevorzugten Ausführungsform ist $R^2$ ausgewählt aus der Gruppe bestehend aus

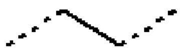,
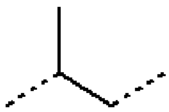,
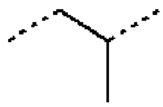,
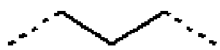

und

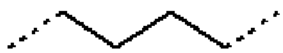,

wobei $R^2$ jeweils mit der linken gestrichelten Linie an Sauerstoffatom der (Meth)acrylatgruppe und mit der rechten gestrichelten Linie an das Sauerstoffatom der Urethangruppe gebunden ist.

In einer bevorzugten Ausführungsform ist $R^3$ ausgewählt aus der Gruppe bestehend aus

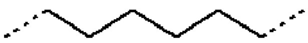,
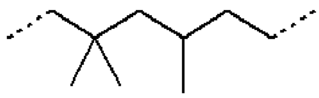,
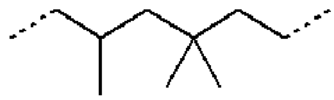,
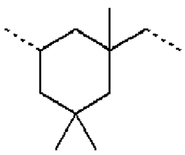,
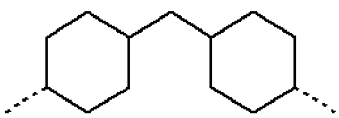,
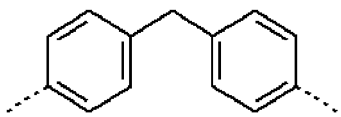,
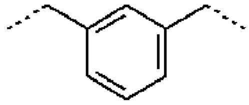
und
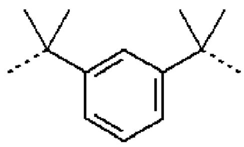,

wobei $R^3$ jeweils mit einer gestrichelten Linie an ein Stickstoffatom der Urethangruppe gebunden ist.

In einer besonders bevorzugten Ausführungsform ist $R^3$ ausgewählt aus der Gruppe bestehend aus

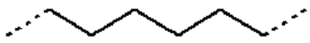, 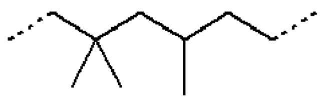, 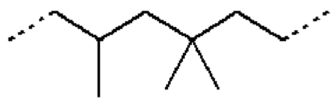

und

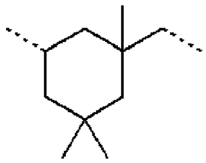.

In einer bevorzugten Ausführungsform ist $R^4$ ein von einem Diol abgeleiteter Rest, wobei das Diol ausgewählt ist aus der Gruppe bestehend aus Ethylenglycol, Diethylenglycol, Triethylenglycol, Tetraethylenglycol, Polyethylenglycol, Propylenglycol, Dipropylenglycol, Tripropylenglycol, Tetrapropylenglycol, Polypropylenglycol, 1,3-Butandiol, 1,4-Butandiol, Poly-(1,4-butylenglycol), Neopentylglycol, 1,6-Hexandiol, 1,4-Cyclohexandiol, 1,10-Decandiol, 1,12-Dodecandiol, $H[O-(CH_2)_5-C(=O)]_aO-CH_2CH_2-O[C(=O)-(CH_2)_5-O]_bH$ mit a = 1 bis 10 und b = 1 bis 10, $H[O-(CH_2)_5-C(=O)]_cO-CH_2CH_2-O-CH_2CH_2-O[C(=O)-(CH_2)_5-O]_dH$ mit c = 1 bis 10 und d = 1 bis 10 und $HO-CH_2CH_2O-[C=(O)-(CH_2)_4-C(=O)-OCH_2CH_2O]_e-H$ mit e = 1 bis 10.

In einer bevorzugten Ausführungsform ist $R^5$ ein von einem Polyol abgeleiteter Rest, wobei das Polyol ausgewählt ist aus der Gruppe bestehend Glycerol, Trimethylolpropan, Ditrimethylolpropan, Pentaerythritol und Dipentaerythritol.

Die Komponente Z-A-2 liegt in einer Menge von 1 bis 20 Gew.-%, bevorzugt von 2 bis 15 Gew.-%, bezogen auf die Gesamtmasse der Zusammensetzung Z-A vor. Vorzugsweise ist die Komponente Z-A-2 ausgewählt aus der Gruppe bestehend aus 2-Hydroxyethyl(meth)acrylat, 2-Hydroxypropyl(meth)acrylat, 3-Hydroxypropyl(meth)acrylat, Tetrahydrofurfuryl(meth)acrylat, 4-(Meth)acryloylmorpholin, Cyclohexyl(meth)acrylat, 3,3,5-Trimethylcyclohexyl(meth)acrylat, 4-(1,1-Dimethylethyl)cyclohexyl(meth)acrylat, Isobornyl(meth)acrylat, (Octahydro-4,7-methano-1H-indenyl)methyl(meth)acrylat, Benzyl-(meth)acrylat, 2-Phenoxyethyl(meth)acrylat, 2-Ethoxyethyl(meth)acrylat, 2-(2-Ethoxy-ethoxy)ethyl(meth)acrylat, 2-[2-(2-Ethoxyethoxy)ethoxy]ethyl(meth)acrylat, 2-Methoxyethyl(meth)acrylat, 2-(2-Methoxyethoxy)ethyl(meth)acrylat, 2-[2-(2-Methoxyethoxy)-ethoxy]ethyl(meth)acrylat, Hexyl(meth)acrylat, 2-Ethylhexyl(meth)acrylat, Decyl-(meth)acrylat, Isodecyl(meth)acrylat, Dodecyl(meth)acrylat, 2-[[(Butylamino)carbonyl]-oxy]ethyl(meth)acrylat, 2-Hydroxy-3-(prop-2-enoyloxy)propyl 2-methyl-2-propylhexanoat, und (5-Ethyl-1,3-dioxan-5-yl)methyl(meth)acrylat.

Die Komponente Z-A-3 liegt in einer Menge von 20 bis 60 Gew.-%, bevorzugt von 25 bis 50 Gew.-%, bezogen auf die Gesamtmasse der Zusammensetzung Z-A vor. Vorzugsweise ist die Komponente Z-A-3 ausgewählt aus der Gruppe bestehend aus Ethylenglycol-di(meth)acrylat, Diethylenglycoldi(meth)acrylat, Triethylenglycoldi(meth)acrylat, Tetra-ethylenglycoldi(meth)acrylat, Polyethylenglycoldi(meth)acrylat, Propylenglycoldi(meth)-acrylat, Dipropylenglycoldi(meth)acrylat, Tripropylenglycoldi(meth)acrylat, Tetrapropy-lenglycoldi(meth)acrylat, Polypropylenglycoldi(meth)acrylat, 1,4-Butandioldi(meth)acrylat, 1,3-Butandioldi(meth)acrylat, 1,6-Hexandioldi(meth)acrylat, 1,10-Decandioldi(meth)-acrylat, 1,12-Dodecandioldi(meth)acrylat, 2-Hydroxypropyl-1,3-di(meth)acrylat, 3-Hydroxypropyl-1,2-di(meth)acrylat, Neopentylglycoldi(meth)acrylat, Trimethylolpropant-ri(meth)acrylat, Pentaerythritoldi(meth)acrylat, Pentaerythritoltri(meth)acrylat, Pentaeryth-ritoltetra(meth)acrylat, 2,2-Bis[4-[3-(meth)acryloyloxy-2-hydroxypropoxy]phenyl]propan, 2,2-Bis[4-(meth)acryloyloxyphenyl]propan, 2,2-Bis[4-(meth)acryloyloxyethoxyphenyl]-propan, 2,2-Bis[4-(meth)acryloyloxydiethoxyphenyl]propan, 2,2-Bis[4-(meth)acryloyloxy-triethoxyphenyl]propan 2,2-Bis[4-(meth)acryloyloxytetraethoxyphenyl]propan, 2,2-Bis[4-(meth)acryloyloxypentaethoxyphenyl]-propan, 2,2-Bis[4-(meth)acryloyloxydipropoxy-phenyl]propan, 2,2-Bis[4-(meth)acryloyloxyethoxyphenyl]-2-[4-(meth)acryloyloxydiethoxy-phenyl]propan, 2-[4-(Meth)acryloyloxydiethoxyphenyl]-2-[4-(meth)-acryloyloxytriethoxy-phenyl]propan, 2-[4-(Meth)acryloyloxydipropoxyphenyl]-2-[4-(meth)acryloyloxytriethoxy-phenyl]propan, 2,2-Bis[4-(meth)acryloyloxyisopropoxyphenyl]propan, ethoxyliertes Bisphenol-A-di(meth)acrylat, propoxyliertes Bisphenol-A-di(meth)acrylat und 3(4),8(9)-Bis((meth)acryloyloxymethyl)tricyclo[5.2.1.$0^{2,6}$]decan.

Die Komponente Z-A-4 liegt in einer Menge von 0,1 bis 5 Gew.-%, bevorzugt von 0,5 bis 3 Gew.-%, bezogen auf die Gesamtmasse der Zusammensetzung Z-A vor. Vorzugsweise ist die Komponente Z-A-4 ausgewählt aus der Gruppe bestehend aus alpha-Diketonen, Benzoinalkylethern, Thioxanthonen, Benzophenonen, Acetophenonen, Acylphosphinoxiden, und Acylgermanium-Verbindungen, bevorzugt ausgewählt aus der Gruppe bestehend aus 2,4,6-Trimethylbenzoyldiphenylphosphinoxid, Phenyl-bis(2,4,6-trimethylbenzoyl)phosphinoxid, Ethyl phenyl(2,4,6-trimethylbenzoyl)phosphinate (CAS 84434-11-7) und (Poly(oxy-1,2-ethanediyl),$\alpha,\alpha',\alpha''$-1,2,3-propanetriyltris[w-[[phenyl(2,4,6-trimethylbenzoyl)phosphinyl]oxy]-Polymer) (CAS 1834525-17-5).

Die Komponente Z-A-5 liegt in einer Menge von 0,01 bis 1 Gew.-%, bevorzugt von 0,01 bis 0,1 Gew.-%, bezogen auf die Gesamtmasse der Zusammensetzung Z-A vor. Vorzugsweise ist die Komponente Z-A-5 ausgewählt aus der Gruppe bestehend aus Hydrochinon, Hydrochinonmonomethylether, 2,6-Di-tert.-butyl-4-methylphenol, *tert.*-Butylhydroxyanisol und 2,2,6,6-Tetramethyl-piperidin-1-oxyl.

Optional kann die Zusammensetzung Z-A auch Farbmittel (Z-A-6) enthalten. Die Komponente Z-A-6 liegt in einer Menge von 0 bis 1 Gew.-%, bevorzugt von 0,0001 bis 0,5 Gew.%, bezogen auf die Gesamtmasse der Zusammensetzung Z-A vor. Vorzugsweise umfasst die Komponente Z-A-6 anorganische Farbpigmente, organische Farbpigmente oder organische Farbstoffe.

Optional kann die Zusammensetzung Z-A auch UV-Absorber (Z-A-7) enthalten. Die Komponente Z-A-7 liegt in einer Menge von 0 bis 1 Gew.-%, bevorzugt von 0,01 bis 0,5 Gew.-%, bezogen auf die Gesamtmasse der Zusammensetzung Z-A vor. Vorzugsweise ist die Komponente Z-A-7 ausgewählt aus der Gruppe bestehend aus 2,2'-Methylenbis[6-(2H-benzotriazol-2-yl)-4-(1,1,3,3-tetramethylbutyl)phenol] (CAS 103597-45-1), 2,2',4,4'-Tetrahydroxybenzophenon (CAS 131-55-5), 2-tert.-Butyl-6-(5-chloro-2H-benzotriazol-2-yl)-4-methylphenol (CAS 3896-11-5), 2,2'-Benzol-1,4-diylbis(4H-3,1-benzoxazin-4-on) (CAS 18600-59-4), 2-(4,6-Bis-(2,4-dimethylphenyl)-1,3,5-triazin-2-yl)-5-(octyloxy)-phenol (CAS 2725-22-6), 2-(2-Hydroxy-5-methylphenyl)benzotriazol (CAS 2440-22-4), 2-(2-Hydroxyphenyl)benzotriazol, 2-(2H-Benzotriazol-2-yl)-6-dodecyl-4-methylphenol (CAS 23328-53-2), 2-(2'-Hydroxy-3',5'-di-terf.-butylphenyl)-5-chlorobenzotriazol (CAS 3864-99-1), 2,2'-Dihydroxy-4-methoxybenzophenon (CAS 131-53-3), 2,2'-Dihydroxy-4,4'-dimethoxybenzophenon (CAS 131-54-4), Ethyl-2-cyano-3-(4-hydroxy-3-methoxyphenyl)prop-2-enoat (CAS 13373-29-0), Bis(1,2,2,6,6-pentamethyl-4-piperidyl)sebacat (CAS 41556-26-7), Methyl-1,2,2,6,6-pentamethyl-4-piperidylsebacat (CAS 82919-37-7), Bis(1-octyloxy-2,2,6,6-tetramethyl-4-piperidyl)sebacat (CAS 129757-67-1) und Bis-(1,2,2,6,6-pentamethyl-4-piperidyl)-[[3,5-bis(1,1-dimethylethyl)-4-hydroxyphenyl]methyl]-butylmalonat (CAS-Nr. 63843-89-0).

Zweite Schiene (S-B)

Die zweite Schiene (S-B) weist vorzugsweise einen Elastizitätsmodul im Bereich von 0,2 MPa bis 100 MPa, bevorzugt im Bereich von 0,5 MPa bis 50 MPa, besonders bevorzugt im Bereich von 0,5 MPa bis 25 MPa, und/oder eine Shore-A-Härte im Bereich von 10 bis 90, bevorzugt im Bereich von 20 bis 70, besonders bevorzugt im Bereich von 20 bis 50, auf.

Die zweite Schiene (S-B) wird vorzugsweise durch Additionsvernetzung einer zweiten Zusammensetzung (Z-B) umfassend

| | |
|---|---|
| Z-B-1) | eine oder mehrere vinylsubstituierte Polysiloxanverbindungen mit einer Viskosität von größer 10000 mPa*s, |
| Z-B-2) | eine oder mehrere vinylsubstituierte Polysiloxanverbindungen mit einer Viskosität von kleiner 10000 mPa*s, |
| Z-B-3) | eine oder mehrere hydrogensubstituierte Polysiloxanverbindungen, |
| Z-B-4) | ein Platin-Katalysator, |
| Z-B-5) | optional Füllstoff und |
| Z-B-6) | optional Additive erhalten. |

In einer bevorzugten Ausführungsform einer erfindungsgemäßen Zusammensetzung Z-B weist die Komponente Z-B-1 einen Gehalt an Vinylgruppen von 0,02 bis 0,1 mol/kg auf, und/oder (vorzugsweise "und")

weist die Komponente Z-B-2 einen Gehalt an Vinylgruppen von 0,02 bis 0,1 mol/kg auf, und/oder (vorzugsweise "und")
weist die Komponente Z-B-3 einen Gehalt an SiH-Gruppen von 1 bis 5 mol/kg auf, und/oder (vorzugsweise "und")
weist die Komponente Z-B-3 eine Viskosität von kleiner 300 mPa*s auf.

In einer weiteren bevorzugten Ausführungsform umfasst die zweite Zusammensetzung Z-B

Z-B-1) in einer Menge von 10 bis 50 Gew.-%, bevorzugt von 20 bis 40 Gew.-%,
Z-B-2) in einer Menge von 20 bis 60 Gew.-%, bevorzugt von 30 bis 50 Gew.-%,
Z-B-3) in einer Menge von 2 bis 20 Gew.-%, bevorzugt von 2 bis 10 Gew.-%,
Z-B-4) in einer Menge von 0,001 bis 0,5 Gew.-%, bevorzugt von 0,001 bis 0,1 Gew.-%,
Z-B-5) in einer Menge von 0 bis 40 Gew.-%, bevorzugt von 5 bis 25 Gew.-%, und

Z-B-6) in einer Menge von 0 bis 10 Gew.-%, bevorzugt von0 bis 5 Gew.-%, jeweils bezogen auf die Gesamtmasse der Zusammensetzung Z-B.

Klebstoffzusammensetzung (Z-C)

Die Klebstoffzusammensetzung dient dazu, die erste, äußere Schiene S-A und die zweite, innere Schiene S-B zur Schienenanordnung zu verkleben. Sie muss daher sowohl kompatibel zur (Meth)acryl-Zusammensetzung (Z-A) als auch kompatibel zur Polysiloxan-Zusammensetzung (Z-B) sein, um eine zuverlässige und dauerhafte Verklebung zu gewährleisten.

In einer bevorzugten Ausführungsform umfasst die Klebstoffzusammensetzung (Z-C)

Z-C-1) ein Lösungsmittel oder ein Lösungsmittelgemisch,
Z-C-2) einen oder mehrere Filmbildner und
Z-C-3) eine oder mehrere Polysiloxanverbindungen.

In einer bevorzugten Ausführungsform ist Lösungsmittel oder ein Lösungsmittelgemisch (Z-C-1) ausgewählt aus der Gruppe bestehend aus Aceton, 2-Butanon, Ethanol, Isopropanol und Dichlormethan, bevorzugt ausgewählt aus der Gruppe bestehend aus Aceton und 2-Butanon.

In einer bevorzugten Ausführungsform ist der Filmbildner (Z-C-2) ein Polymer oder Copolymer, das aus einer oder mehreren Monomereinheiten ausgewählt aus der Gruppe bestehend aus

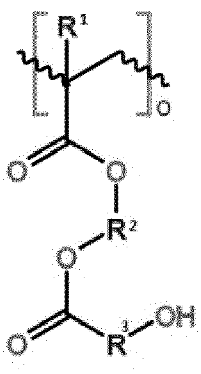 , 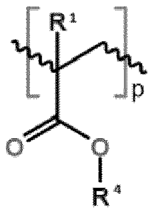 , 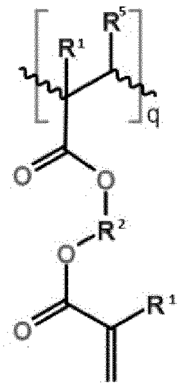 und 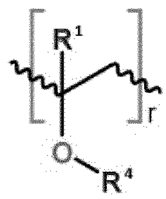

besteht, wobei

$R^1$ = H oder C1- bis C4-Alkylgruppe,
$R^2$ = eine optional substituierte C1- bis C4-Alkylengruppe,
$R^3$ = eine optional substituierte C1- bis C8-Alkylengruppe,
$R^4$ = C1- bis C4-Alkylgruppe,
$R^5$ = COOH oder $COOR^4$
o = 0 bis 1000
p = 0 bis 1000
q = 0 bis 1000
r = 0 bis 1000
wobei o + p + q + r = 10 bis 2000.

In einer weiteren bevorzugten Ausführungsform ist die Polysiloxanverbindung (Z-C-3) eine hydrogensubstituierte Polysiloxanverbindung, bevorzugt eine Polysiloxanverbindung der Formel

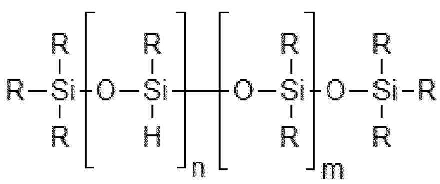

oder

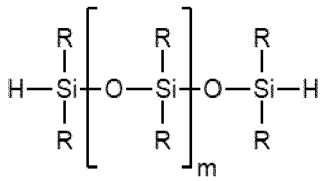

,

wobei R eine Alkyl- oder Arylgruppe, bevorzugt eine Methylgruppe, ist und wobei n = 2 bis 100 und m = 0 bis 1000 sind. Vorzugsweise sind n = 2 bis 80 und m = 5 bis 800.

In einer weiteren bevorzugten Ausführungsform ist die Polysiloxanverbindung (Z-C-3) eine hydrogensubstituierte Polysiloxanverbindung der Formel

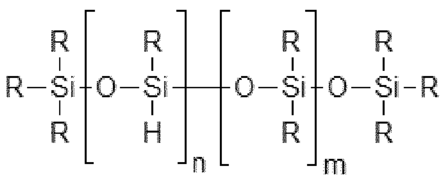

,

wobei

R eine Alkylgruppe, bevorzugt eine Methylgruppe, ist und wobei n = 2 bis 100 und m = 0 bis 200 sind. Vorzugsweise sind n = 2 bis 80 und m = 0.

In einer bevorzugten Ausführungsform weist die Polysiloxanverbindung (Z-C-3) einen SiH-Gehalt von 1 bis 20 mmol/g auf.

Optional kann eine erfindungsgemäße Klebstoffzusammensetzung (Z-C) auch eine oder mehrere (Meth)acryl-Monomere Z-C-4 umfassen.

Vorzugsweise sind die (Meth)acryl-Monomere Z-C-4 ausgewählt aus der Gruppe bestehend aus Methyl(meth)acrylat, Ethyl(meth)acrylat, 2-Hydroxyethyl(meth)acrylat, 2-Hydroxypropyl(meth)acrylat, 3-Hydroxypropyl(meth)acrylat, Ethylenglycoldi(meth)acrylat, Diethylenglycoldi(meth)acrylat, Triethylenglycoldi(meth)acrylat, Tetraethylenglycoldi-(meth)acrylat, Polyethylenglycoldi(meth)acrylat, Propylenglycoldi(meth)acrylat, Dipropy-lenglycoldi(meth)acrylat, Tripropylenglycoldi(meth)acrylat, Tetrapropylenglycoldi(meth)-acrylat, Polypropylenglycoldi(meth)acrylat, 1,4-Butandioldi(meth)acrylat, 1,3-Butan-dioldi(meth)acrylat, 1,6-Hexandioldi(meth)acrylat, 1,10-Decandioldi(meth)acrylat, 1,12-Dodecandioldi(meth)acrylat, 2-Hydroxypropyl-1,3-di(meth)acrylat, 3-Hydroxypropyl-1,2-di(meth)acrylat, Neopentylglycoldi(meth)acrylat, Trimethylolpropantri(meth)acrylat, Penta-erythritoldi(meth)acrylat, Pentaerythritoltri(meth)acrylat, Pentaerythritoltetra(meth)acrylat, 2,2-Bis[4-[3-(meth)acryloyloxy-2-hydroxypropoxy]phenyl]propan, 2,2-Bis[4-(meth)acryloyl-oxyphenyl]propan, 2,2-Bis[4-(meth)acryloyloxyethoxyphenyl]propan, 2,2-Bis[4-(meth)-acryloyloxydiethoxyphenyl]propan, 2,2-Bis[4-(meth)acryloyloxytriethoxyphenyl]propan 2,2-Bis[4-(meth)acryloyloxytetraethoxyphenyl]propan, 2,2-Bis[4-(meth)acryloyloxypenta-ethoxyphenyl]-propan, 2,2-Bis[4-(meth)acryloyloxydipropoxyphenyl]propan, 2,2-Bis[4-(meth)acryloyloxyethoxyphenyl]-2-[4-(meth)acryloyloxydiethoxyphenyl]propan, 2-[4-(Meth)acryloyloxydiethoxyphenyl]-2-[4-(meth)-acryloyloxytriethoxyphenyl]propan, 2-[4-(Meth)acryloyloxydipropoxyphenyl]-2-[4-(meth)acryloyloxytriethoxyphenyl]propan, 2,2-Bis[4-(meth)acryloyloxyisopropoxyphenyl]propan, ethoxyliertes Bisphenol-A-di(methacrylat), propoxyliertes Bisphenol-A-di(meth)acrylat und 3(4),8(9)-Bis((meth)-acryloyloxymethyl)tricyclo[5.2.1.$0^{2,6}$]decan.

In einer bevorzugten Ausführungsform umfasst eine erfindungsgemäße Klebstoffzusammensetzung (Z-C)

| | |
|---|---|
| Z-C-1) | in einer Menge von 50 bis 95 Gew.-%, bevorzugt 80 bis 95 Gew.-%, |
| Z-C-2) | in einer Menge von 1 bis 20 Gew.-%, bevorzugt 2 bis 15 Gew.-% und |
| Z-C-3) | in einer Menge von 1 bis 10 Gew.-%, bevorzugt 1 bis 5 Gew.-%, jeweils bezogen auf die Gesamtmasse der Zusammensetzung Z-C. |

In einer weiteren bevorzugten Ausführungsform umfasst eine erfindungsgemäße Klebstoffzusammensetzung (Z-C)

Z-C-1) in einer Menge von 50 bis 95 Gew.-%, bevorzugt 70 bis 95 Gew.-%,
Z-C-2) in einer Menge von 1 bis 20 Gew.-%, bevorzugt 2 bis 15 Gew.-%,
Z-C-3) in einer Menge von 1 bis 10 Gew.-%, bevorzugt 1 bis 5 Gew.-% und
Z-C-4) in einer Menge von 0 bis 30 Gew.-%, bevorzugt 0 bis 15 Gew.-%, jeweils bezogen auf die Gesamtmasse der Zusammensetzung Z-C.

Erfindungsgemäß wird nach einem weiteren Aspekt ein Verfahren zur Herstellung einer dentalen Schienenanordnung vorgeschlagen, wie es in Anspruch 12 definiert ist, nämlich ein

Verfahren zur Herstellung einer dentalen Schienenanordnung mit den folgenden Schritten

i) Herstellen oder Bereitstellen einer ersten Zusammensetzung (Z-A) umfassend die Bestandteile Z-A-1, Z-A-2, Z-A-3, Z-A-4, Z-A-5, optional Z-A-6 und optional Z-A-7,
ii) Bereitstellen eines ersten Datensatzes (D-A),
iii) Herstellen einer ersten Schiene (S-A) in einer Form entsprechend des ersten Datensatzes (D-A) durch Polymerisation der ersten Zusammensetzung (Z-A),
iv) Herstellen oder Bereitstellen einer Klebstoffzusammensetzung (Z-C) umfassend die Bestandteile Z-C-1, Z-C-2, Z-C-3, und optional Z-C-4,
v) Auftragen der Klebstoffzusammensetzung (Z-C) auf die Innenseite (S-A-IS) der ersten Schiene (S-A),
vi) Herstellen oder Bereitstellen einer zweiten Zusammensetzung (Z-B) umfassend die Bestandteile Z-B-1, Z-B-2, Z-B-3, Z-B-4, optional Z-B-5 und optional Z-B-6,
vii) Auftragen der zweiten Zusammensetzung (Z-B) auf die in Schritt v) mit der Klebstoffzusammensetzung (Z-C) vorbehandelte Innenseite (S-A-IS) der ersten Schiene (S-A),
viii) Aushärten der zweiten Zusammensetzung (Z-B) zur zweiten Schiene (S-B) und
ix) optional Nachbearbeiten der zweiten Schiene (S-B).

In einer bevorzugten Ausgestaltung handelt es sich um ein Verfahren zur Herstellung einer dentalen Schienenanordnung wobei der erste Datensatz (D-A) einen ersten Teildatensatz (D-A-IS) umfasst, der der Innenseite (S-A-IS) der ersten Schiene (S-A) entspricht, und einen zweiten Teildatensatz (D-A-AS) umfasst, der der Außenseite (S-A-AS) der ersten Schiene (S-A) entspricht.

Erfindungsgemäß ist auch eine erfindungsgemäße dentale Schienenanordnung zur Anwendung in einem therapeutischen Verfahren zur Behandlung von Zahnfehlstellungen, Knirschen, Bruxismus oder Schlafapnoe-Syndrom.

Erfindungsgemäß ist auch die Verwendung einer erfindungsgemäßen dentalen Schienenanordnung zur Behandlung von Zahnfehlstellungen, Knirschen, Bruxismus oder Schlafapnoe-Syndrom.

Ausführungsbeispiele

Die Ziele und Vorteile dieser Offenbarung werden durch die folgenden Beispiele weiter veranschaulicht, aber die spezifischen Materialien und deren Mengen, die in diesen Beispielen genannt werden, sowie andere Bedingungen und Details sollten nicht so ausgelegt werden, dass sie diese Offenbarung unangemessen einschränken.

Die in den Beispielen verwendeten Materialien werden im Folgenden zusammengefasst.

| | |
|---|---|
| TMDI | 2,2,4-Trimethylhexamethylendiisocyanat / 2,4,4-Trimethylhexamethylendiisocyanat (Isomerengemisch; CAS 32052-51-0) |
| IPDI | Isophorondiisocyanat (CAS 4098-71-9) |
| DBTL | Dibutylzinndilaurat (CAS 77-58-7) |
| BHT | 2,6-Di-tert.-butyl-4-methylphenol (CAS 128-37-0) |
| TMDI-UDMA | 7,7,9-Trimethyl-3,14-dioxa-4,13-dioxo-5,12-diazahexadecan-1,16-dioxydi(meth)acrylat / 7,9,9-Trimethyl-3,14-dioxa-4,13-dioxo-5,12-diazahexadecan-1,16-dioxydi(meth)acrylat (Isomerengemisch; CAS 72869-86-4) |
| IPDI-UDMA | 1,5,5-Trimethyl-1-[(2-methacryloyloxyethyl)carbamoylmethyl]-3-(2-methacryloyloxyethyl) carbamoylcyclohexan (CAS 42405-01-6) |
| IBOA | Isobornylacrylat (CAS 5888-33-5) |
| HPMA | Hydroxypropylmethacrylat (CAS 27813-02-1) |
| TEDMA | Triethylenglycoldimethacrylat (CAS 109-16-0) |
| TCDDMA | Octahydro-4,7-methano-1H-indendiyl)bis(methylen)bismethacrylat (CAS 43048-08-4) |

(fortgesetzt)

| | |
|---|---|
| TPO | Diphenyl(2,4,6-trimethylbenzoyl)phosphinoxid (CAS 75980-60-8) |

Messmethoden:

3-Punkt-Biegefestigkeit (BF): Die Biegefestigkeiten wurden angepasst an ISO 4049:2009 bestimmt. Aus den Druckharzen wurden mittels 3D-Druck (SolFlex350, W2P Engineering GmbH; Wellenlänge 385 nm, Leistung 8.3 mW/cm$^2$, Pixelgröße 50 $\mu$m, Schichtstärke 50 $\mu$m) Prüfkörper mit der Abmessung 40 mm x 5 mm x 5 mm hergestellt und mit einem Otoflash (VOCO GmbH) mit 2x2000 Blitzen nachbelichtet. Die Bestimmung der Biegefestigkeit erfolgt bei einer Vorschubgeschwindigkeit von 1 mm/min an einer Zwick-Universalprüfmaschine (Zwick GmbH & Co. KG, Ulm).

Elastizitätsmodul (E-Modul): Der Elastizitätsmodul wurde analog der Berechnung in ADA Spec. No. 27:1993 (7.8.4.2) als Steigung der Spannung-Dehnungs-Kurve der 3-Punkt-Biegefestigkeitsmessung im linear-elastischen Bereich ermittelt.

$$E = \frac{3\,L}{4\,b\,h^3}\frac{\Delta F}{\Delta d}$$

(L: Stützweite; b: Probenbreite; h: Probendicke; $\Delta$d: Deformation im linear-elastischen Bereich; $\Delta$F: Kraftänderung bei einer Deformation $\Delta$d)

Shore-A-Härte: Die Shore-A-Härte wurde entsprechend DIN 53 505 bestimmt.

Viskosität: Gemessen wurde standardmäßig an einem Rheometer der Firma Anton Paar des Typs Physica MCR 301 mit einer 50 mm-Messplatte (Platte/Platte), 0.5 mm Spaltabstand und 1 g Substanz. Vor der Messung wird die Platte auf eine Temperatur von 25 °C temperiert. Die Messdauer beträgt 30 s bei einer Scherrate von 10/s.

Molekulargewicht (MW): Das Molekulargewicht wurde mit Hilfe einer GPC (Agilent Technologies 1260 Infinity) bestimmt. Das System besteht aus einer Vorsäule (Länge 50 mm, Durchmesser 8 mm, Partikelgröße 5 $\mu$m) und zwei Hauptsäulen (I: Länge 300 mm, Durchmesser 8 mm, Partikelgröße 5 $\mu$m, 50 A; II: Länge 300 mm, Durchmesser 8 mm, Partikelgröße 5 $\mu$m, 100 A). Als Laufmittel wird THF verwendet. Als Standard wird Polystyrol verwendet.

Beispiel 1a:

63.08 g (0.3 mol) TMDI wurden in 400 ml Chloroform gelöst. Anschließend wurden 21.2 g (0.2 mol) Diethylenglycol, 200 mg Dibutylzinndilaurat und 100 mg BHT zugegeben. Es wurde unter Rühren für 2 Stunden auf 55 °C erwärmt. Es wurde auf Raumtemperatur abgekühlt und es wurden 31.0 g (0.2 mol) 2-Isocyanatoethylmethacrylat zugegeben. Anschließend wurde für weitere 6 Stunden auf 55 °C erwärmt. Als Reaktionskontrolle wurde das Verschwinden der NCO-Bande bei ca. 2270 cm-' im IR-Spektrum beobachtet. Anschließend wurde das Lösungsmittel im Vakuum entfernt. Es wurde eine schwach gelbe Flüssigkeit erhalten. Das mittlere Molekulargewicht betrug 1150 g/mol.

Beispiel 1b:

66.7 g (0.3 mol) IPDI wurden in 400 ml Chloroform gelöst. Anschließend wurden 21.2 g (0.2 mol) Diethylenglycol, 200 mg Dibutylzinndilaurat und 100 mg BHT zugegeben. Es wurde unter Rühren für 2 Stunden auf 55 °C erwärmt. Es wurde auf Raumtemperatur abgekühlt und es wurden 31.0 g (0.2 mol) 2-Isocyanatoethylmethacrylat zugegeben. Anschließend wurde für weitere 6 Stunden auf 55 °C erwärmt. Als Reaktionskontrolle wurde das Verschwinden der NCO-Bande bei ca. 2270 cm$^{-1}$ im IR-Spektrum beobachtet. Anschließend wurde das Lösungsmittel im Vakuum entfernt. Es wurde eine schwach gelbe Flüssigkeit erhalten. Das mittlere Molekulargewicht betrug 1190 g/mol.

Beispiel 1c:

63.08 g (0.3 mol) TMDI wurden in 400 ml Chloroform gelöst. Anschließend wurden 26.5 g (0.25 mol) Diethylenglycol, 200 mg Dibutylzinndilaurat und 100 mg BHT zugegeben. Es wurde unter Rühren für 2 Stunden auf 55 °C erwärmt. Es wurde auf Raumtemperatur abgekühlt und es wurden 15.5 g (0.1 mol) 2-Isocyanatoethylmethacrylat zugegeben. Anschließend wurde für weitere 6 Stunden auf 55 °C erwärmt. Als Reaktionskontrolle wurde das Verschwinden der NCO-Bande bei ca. 2270 cm$^{-1}$ im IR-Spektrum beobachtet. Anschließend wurde das Lösungsmittel im Vakuum entfernt. Es wurde eine schwach gelbe Flüssigkeit erhalten. Das mittlere Molekulargewicht betrug 2100 g/mol.

Beispiel 1d:

63.08 g (0.3 mol) TMDI wurden in 400 ml Chloroform gelöst. Anschließend wurden 28.3 g (0.267 mol) Diethylenglycol, 200 mg Dibutylzinndilaurat und 100 mg BHT zugegeben. Es wurde unter Rühren für 2 Stunden auf 55 °C erwärmt. Es wurde auf Raumtemperatur abgekühlt und es wurden 10.3 g (0.067 mol) 2-Isocyanatoethylmethacrylat zugegeben. Anschließend wurde für weitere 6 Stunden auf 55 °C erwärmt. Als Reaktionskontrolle wurde das Verschwinden der NCO-Bande bei ca. 2270 $cm^{-1}$ im IR-Spektrum beobachtet. Anschließend wurde das Lösungsmittel im Vakuum entfernt. Es wurde eine schwach gelbe Flüssigkeit erhalten. Das mittlere Molekulargewicht betrug 3050 g/mol.

Beispiel 1e:

100 mg Dibutylzinndilaurat wurden in 126.2 g (0.6 mol) TMDI gelöst. Anschließend wurden über 2 Stunden langsam 9.2 g (0.1 mol) wasserfreies Glycerin getropft. Die Temperatur wurde dabei zwischen 50 und 55 °C gehalten. Nach beendeter Zugabe wurde weitere 3 Stunden bei 55 °C gerührt. Der Überschuss des Diisocyanates wurde im Vakuum (0.1 mbar) bei 150 bis 170 °C abdestilliert. Das Reaktionsprodukt wurde in 400 ml Chloroform gelöst und es wurden 100 mg Dibutylzinndilaurat und 100 mg BHT zugegeben. Anschließend wurden 46.5 g (0.3 mol) 2-Isocyanatoethylmethacrylat zugegeben und für weitere 6 Stunden auf 55 °C erwärmt. Als Reaktionskontrolle wurde das Verschwinden der NCO-Bande bei ca. 2270 $cm^{-1}$ im IR-Spektrum beobachtet. Anschließend wurde das Lösungsmittel im Vakuum entfernt. Es wurde eine schwach gelbe Flüssigkeit erhalten. Das mittlere Molekulargewicht betrug 1190 g/mol.

Beispiel 1f:

100 mg Dibutylzinndilaurat wurden in 133.4 g (0.6 mol) IPDI gelöst. Anschließend wurden über 2 Stunden langsam 9.2 g (0.1 mol) wasserfreies Glycerin getropft. Die Temperatur wurde dabei zwischen 50 und 55 °C gehalten. Nach beendeter Zugabe wurde weitere 3 Stunden bei 55 °C gerührt. Der Überschuss des Diisocyanates wurde im Vakuum (0.1 mbar) bei 150 bis 170 °C abdestilliert. Das Reaktionsprodukt wurde in 400 ml Chloroform gelöst und es wurden 100 mg Dibutylzinndilaurat und 100 mg BHT zugegeben. Anschließend wurden 46.5 g (0.3 mol) 2-Isocyanatoethylmethacrylat zugegeben und für weitere 6 Stunden auf 55 °C erwärmt. Als Reaktionskontrolle wurde das Verschwinden der NCO-Bande bei ca. 2270 $cm^{-1}$ im IR-Spektrum beobachtet. Anschließend wurde das Lösungsmittel im Vakuum entfernt. Es wurde eine schwach gelbe Flüssigkeit erhalten. Das mittlere Molekulargewicht betrug 1220 g/mol.

Beispiel 2A:

Für die Herstellung der Zusammensetzungen Z-A wurden die in den Tabellen 1 und 2 aufgeführten Bestandteile jeweils in den angegebenen Mengen eingewogen und mit einem KPG-Rührwerk für 60 Minuten bei Raumtemperatur gerührt, bis eine homogene Lösung entstanden war.

Tabelle 1:

| Beispiel | | 2A-1 | 2A-2 | 2A-3 | 2A-4 |
|---|---|---|---|---|---|
| Z-A-1 | TMDI-UDMA | 60.00 | | 50.00 | |
| | IPDI-UDMA | | 60.00 | | 50.00 |
| | Beispiel 1a | | | 10.00 | |
| | Beispiel 1b | | | | 10.00 |
| Z-A-2 | IBOA | 10.00 | | 10.00 | |
| | HPMA | | 8.50 | | 8.50 |
| Z-A-3 | TEDMA | 28.50 | | 28.50 | |
| | TCDDMA | | 30.00 | | 30.00 |
| Z-A-4 | TPO | 1.50 | 1.50 | 1.50 | 1.50 |
| E-Modul [MPa] | | 1950 | 1900 | 1780 | 1765 |

Tabelle 2:

| Beispiel | | 2A-5 | 2A-6 | 2A-7 | 2A-8 |
|---|---|---|---|---|---|
| Z-A-1 | TMDI-UDMA | 50.00 | 50.00 | 50.00 | 50.00 |
| | Beispiel 1c | 10.00 | | | |
| | Beispiel 1d | | 10.00 | | |
| | Beispiel 1e | | | 10.00 | |
| | Beispiel 1f | | | | 10.00 |
| Z-A-2 | IBOA | 10.00 | 10.00 | 10.00 | 10.00 |
| Z-A-3 | TEDMA | 28.50 | 28.50 | 28.50 | 28.50 |
| Z-A-4 | TPO | 1.50 | 1.50 | 1.50 | 1.50 |
| E-Modul [MPa] | | 1750 | 1600 | 1570 | 1520 |

Beispiel 2B:

Beispiel 2B-1: 44.0 g Vinylpolysiloxan (Viskosität 1000 mPa*s, Vinylgehalt 0.04 mmol/g), 30.0 g Vinylpolysiloxan (Viskosität 50000 mPa*s, Vinylgehalt 0.03 mmol/g), 6.0 g Hydrogenpolysiloxan (Viskosität 200 mPa*s, SiH-Gehalt 2,3 mmol/g) und 20.0 g Aerosil R8200 wurden an einem SpeedMixer (Hauschild GmbH & CO. KG) homogen gemischt.

Beispiel 2B-2: 44.0 g Vinylpolysiloxan (Viskosität 1000 mPa*s, Vinylgehalt 0.04 mmol/g), 33.0 g Vinylpolysiloxan (Viskosität 50000 mPa*s, Vinylgehalt 0.03 mmol/g), 20.0 g Aerosil R8200 und 3.0 g Platin-Katalysator (1% Platin(0)-1,3-divinyl-1,1,3,3-tetramethyldisiloxan in 1,3-Divinyl-1,1,3,3-tetramethyldisiloxan) wurden an einem SpeedMixer (Hauschild GmbH & CO. KG) homogen gemischt.

Die beiden Pasten 2B-1 und 2B-2 wurden in eine 50 ml Kartusche (1:1, weiß, CS 050-01-09, Sulzer Mixpac AG) abgefüllt. Die Shore-A-Härte nach DIN 53 505 betrug 30.

Beispiel 3

Es wurden 10.0 g Copolymer (2-[(2-Methyl-1-oxo-2-propen-1-yl)oxy]ethyl-6-hydroxy-hexanoat/Ethylmethcrylat-Copolymer (1:1 mol/mol) 70.000 g/mol) und 2.0 g Hydrogenpolysiloxan (Viskosität 20 mPa*s, SiH-Gehalt 10 mmol/g) in 2-Butanon für 24 Stunden bei Raumtemperatur gelöst, bis eine homogene Lösung entstanden war.

Beispiel 4

Für die Herstellung der Schienen wurde bei drei Probanden die Zahnsituation durch Abformung aufgenommen (V-Posil medium, VOCO GmbH). Anschließend wurden die Abdrücke durch Einscannen (3shape E3 Desktopscanner, 3Shape A/S) in digitale Datensätze umgewandelt. Auf Basis dieser digitalen Datensätze wurden zunächst Modelle aus V-Print model beige (VOCO GmbH) gemäß Herstellerangaben gedruckt (SolFlex350, W2P Engineering GmbH; Wellenlänge 385 nm, Leistung 8.3 mW/$cm^2$, Pixelgröße 50 $\mu$m, Schichtstärke 50 $\mu$m) und nachbelichtet (Otoflash, VOCO GmbH, 2x2000 Blitze). Anschließend wurden auf Basis der digitalen Datensätze digitale Datensätze für die Schienen erstellt (exocad Dental CAD - Bite Splint Module, exocad GmbH). Dabei wurden die Datensätze so designt, dass sie Teildatensätze für innere und äußere Schiene mit jeweils einer mittleren Schichtstärke von ca. 1.5 mm aufwiesen. Anschließend wurden anhand dieser Teildatensätze die äußeren Teilschienen (S-A) aus den Zusammensetzungen Z-A gedruckt (SolFlex350, W2P Engineering GmbH; Wellenlänge 385 nm, Leistung 8.3 mW/$cm^2$, Pixelgröße 50 $\mu$m, Schichtstärke 50 $\mu$m) und nachbelichtet (Otoflash, VOCO GmbH, 2x2000 Blitze). Auf die Innenseite der Äußeren Schienen wurde die Klebstoffzusammensetzung Z-C (Beispiel 3) aufgetragen, für 60 Sekunden einwirken gelassen und anschließend mit ölfreier Luft getrocknet. Danach wurde die Zusammensetzung Z-B unter Mischen auf die konditionierte Innenseite der äußeren Schiene aufgetragen. Die äußere Schiene wurde dann auf das entsprechende Modell aufgesetzt, fixiert und für 15 Minuten im Drucktopf bei 40 bis 45 ausgehärtet. Anschließend wurden Überschüsse mit einem Skalpell entfernt und die Übergänge beschliffen (120er Körnung) und poliert.

Für die Beurteilung des Tragekomforts trugen die Probenden die für sie jeweils passenden Schienen für einen Zeitraum von 12 Stunden (über Nacht). Anschließend erfolgte eine subjektive Bewertung nach folgenden Kriterien ("--" sehr unangenehm / "-" unangenehm / "o" ungewohnt / "++" gut / "++" sehr gut). Die Angaben in Tabelle 3 bis 5 sind die Summe aus den drei Einzelbeurteilungen. Waren sich die drei Probanden in der Beurteilung einig, entspricht die Angabe auch den drei Einzelbeurteilungen. Gab es unterschiedliche Einzelbeurteilungen, setzten sich die drei Probenden anschließend zusammen und einigten sich auf eine Gesamtbeurteilung.

Für die Beurteilung der Genauigkeit wurden aus den Daten der Probanden Modelle aus V-Print model beige (VOCO GmbH) gemäß Herstellerangaben gedruckt (SolFlex350, W2P Engineering GmbH; Wellenlänge 385 nm, Leistung 8.3 mW/cm$^2$, Pixelgröße 50 $\mu$m, Schichtstärke 50 $\mu$m) und nachbelichtet (Otoflash, VOCO GmbH, 2x2000 Blitze). Die Schienen wurden jeweils auf die entsprechenden Modelle aufgesetzt und die Passgenauigkeit bewertet ("++" sehr gute Passung / "+" gute Passung / "o" akzeptable Passung / "-" kleinere, einzelne oder lokale Ungenauigkeiten / "--" größere, zahlreiche oder deutliche Ungenauigkeiten).

Für die Beurteilung der (Form)stabilität wurden die Schienen auf die entsprechenden Modelle aufgesetzt in demineralisiertem Wasser in einem Kausimulator (CS-4.4 professional, SD Mechatronik GmbH) bei 37 °C für 5000 Zyklen jeweils im Wechsel mit einem Druck von 50 N belastet und entlastet. Anschließend wurde das Aussehen der Schiene sowie die Passgenauigkeit überprüft und bewertet ("++"/ "+" / "o" / "-" / "--").

In den Tabellen 3 und 4 sind die getesteten Kombinationen aus innerer und äußerer Schiene sowie die Beurteilungen dargestellt.

Tabelle 3:

| Beispiel | 4a | 4b | 4c | 4d |
|---|---|---|---|---|
| Äußere Schiene (S-A) | Beispiel 2A-1 | Beispiel 2A-2 | Beispiel 2A-3 | Beispiel 2A-4 |
| Innere Schiene (S-B) | Beispiel 2B-1/2B-2 | Beispiel 2B-1/2B-2 | Beispiel 2B-1/2B-2 | Beispiel 2B-1/2B-2 |
| Tragekomfort | ++ | ++ | ++ | ++ |
| Genauigkeit | ++ | ++ | ++ | ++ |
| Formstabilität | ++ | ++ | ++ | ++ |

Tabelle 4:

| Beispiel | 4e | 4f | 4g | 4h |
|---|---|---|---|---|
| Äußere Schiene (S-A) | Beispiel 2A-1 | Beispiel 2A-2 | Beispiel 2A-3 | Beispiel 2A-4 |
| Innere Schiene (S-B) | Beispiel 2B-1/2B-2 | Beispiel 2B-1/2B-2 | Beispiel 2B-1/2B-2 | Beispiel 2B-1/2B-2 |
| Tragekomfort | ++ | ++ | ++ | ++ |
| Genauigkeit | ++ | ++ | ++ | ++ |
| Formstabilität | ++ | ++ | ++ | ++ |

Vergleichsbeispiel 5:

Als Vergleich wurden duroplastische Schienenanordnungen hergestellt, die nur aus Zusammensetzungen Z-A bestanden. Hier wurde durchgehend der Tragekomfort schlechter bewertet. Dies entspricht im Wesentlichen dem Stand der Technik, bei dem eine einteilige duroplastische Schiene in einem generativen Verfahren hergestellt wird.

Tabelle 5:

| Vergleichseispiel | 5a | 5b | 5c | 5d |
|---|---|---|---|---|
| Schiene (S-A) | Beispiel 2A-1 | Beispiel 2A-2 | Beispiel 2A-3 | Beispiel 2A-4 |
| Tragekomfort | - | - | - | - |
| Genauigkeit | ++ | ++ | ++ | ++ |
| Formstabilität | ++ | ++ | ++ | ++ |

Vergleichsbeispiel 6:

Zum Vergleich wurden Schienen aus einem thermoplatischen, zweischichtigen Material (Erkoloc-pro, transparent ∅ 120 mm, Stärke 3 mm, Erkodent) hergestellt. Dazu wurde auf Basis der digitalen Datensätze ein Modell für jeden Probanden hergestellt. Anschließend wurden die thermoplatischen Schienen durch Tiefziehen entsprechend der Herstellerangaben aus Erkoloc-pro hergestellt. Es ergab sich folgende Bewertung. Tragekomfort "+", Genauigkeit "--" und Formstabilität "+".

## Patentansprüche

**1.** Dentale Schienenanordnung umfassend

a) eine erste duroplastische Schiene (S-A),
b) eine zweite Schiene (S-B) und
c) eine Klebstoffzusammensetzung (Z-C),

wobei die erste Schiene (S-A) eine Innenseite (S-A-IS) und eine Außenseite (S-A-AS) aufweist und wobei die zweite Schiene (S-B) eine Innenseite (S-B-IS) und eine Außenseite (S-B-AS) aufweist und wobei die Form der Innenseite (S-A-IS) der ersten Schiene der Form der Außenseite (S-B-AS) der zweiten Schiene entspricht und wobei die Klebstoffzusammensetzung (Z-C) die Innenseite (S-A-IS) der ersten Schiene (S-A) mit der Außenseite (S-B-AS) der zweiten Schiene (S-B) verklebt, **dadurch gekennzeichnet, dass** die erste Schiene (S-A) einen höheren Elastizitätsmodul aufweist als die zweite Schiene (S-B).

**2.** Dentale Schienenanordnung nach Anspruch 1 wobei die Klebstoffzusammensetzung (Z-C) umfasst

Z-C-1) ein Lösungsmittel oder ein Lösungsmittelgemisch,
Z-C-2) einen oder mehrere Filmbildner und
Z-C-3) eine oder mehrere Polysiloxanverbindungen.

**3.** Dentale Schienenanordnung nach Anspruch 2 wobei der Filmbildner (Z-C-2) ein Polymer oder Copolymer ist, das aus einer oder mehreren Monomereinheiten ausgewählt aus der Gruppe bestehend aus

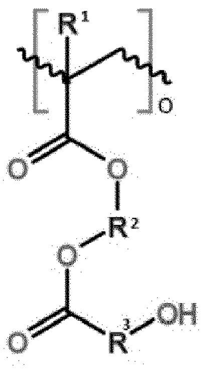 , 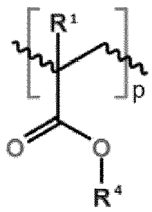 , 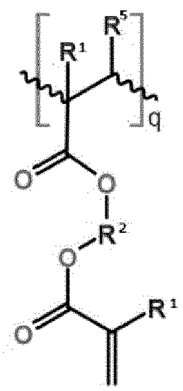 und 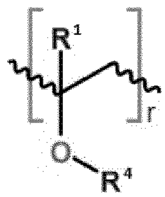

besteht, wobei

$R^1$ = H oder C1- bis C4-Alkylgruppe,
$R^2$ = eine optional substituierte C1- bis C4-Alkylengruppe,
$R^3$ = eine optional substituierte C1- bis C8-Alkylengruppe,
$R^4$ = C1- bis C4-Alkylgruppe,
$R^5$ = COOH oder $COOR^4$
o = 0 bis 1000
p = 0 bis 1000
q = 0 bis 1000
r = 0 bis 1000
wobei o + p + q + r = 10 bis 2000
und/oder
die Polysiloxanverbindung (Z-C-3) eine hydrogensubstituierte Polysiloxanverbindung, bevorzugt eine Polysilo-

xanverbindung der Formel

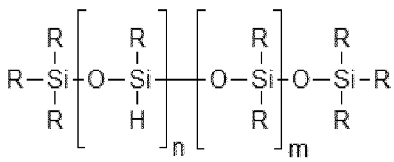

oder

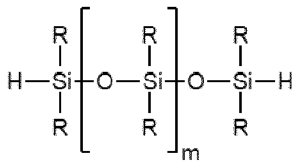

ist, wobei
Reine Alkyl- oder Arylgruppe, bevorzugt eine Methylgruppe, ist und wobei n = 2 bis 100 und m = 0 bis 1000 sind.

**4.** Dentale Schienenanordnung nach Anspruch 2 oder 3, wobei die Klebstoffzusammensetzung (Z-C) zusätzlich ein (Meth)acryl-Monomere Z-C-4 umfasst.

**5.** Dentale Schienenanordnung nach einem der vorangehenden Ansprüche, wobei der Elastizitätsmodul der ersten Schiene (S-A) im Bereich von 500 MPa bis 2500 MPa, bevorzugt im Bereich von 1000 MPa bis 2500 MPa, besonders bevorzugt im Bereich von 1000 MPa bis 2000 MPa, liegt
und/oder
der Elastizitätsmodul der zweiten Schiene S-B im Bereich von 0,2 MPa bis 100 MPa, bevorzugt im Bereich von 0,5 MPa bis 50 MPa, besonders bevorzugt im Bereich von 0,5 MPa bis 25 MPa, liegt und/oder die Shore-A-Härte der zweiten Schiene (S-B) im Bereich von 10 bis 90, bevorzugt im Bereich von 20 bis 70, besonders bevorzugt im Bereich von 20 bis 50, liegt.

**6.** Dentale Schienenanordnung nach einem der vorangehenden Ansprüche, wobei die erste duroplastische Schiene (S-A) durch Polymerisation einer ersten Zusammensetzung (Z-A) umfassend

Z-A-1) ein, zwei oder mehrere multifunktionelle Urethan(meth)acrylate,
Z-A-2) ein, zwei oder mehrere monofunktionelle (Meth)acrylate,
Z-A-3) ein, zwei oder mehrere multifunktionelle (Meth)acrylate ohne Urethangruppen,
Z-A-4) einen Photoinitiator oder ein Photoinitiatorsystem,
Z-A-5) ein, zwei oder mehrere Inhibitoren,
Z-A-6) optional Farbmittel und
Z-A-7) optional UV-Absorber

erhalten wird,
und/oder
die zweite Schiene (S-B) durch Additionsvernetzung einer zweiten Zusammensetzung (Z-B) umfassend

Z-B-1) eine oder mehrere vinylsubstituierte Polysiloxanverbindungen mit einer Viskosität von größer 10000 mPa*s,
Z-B-2) eine oder mehrere vinylsubstituierte Polysiloxanverbindungen mit einer Viskosität von kleiner 10000 mPa*s,
Z-B-3) eine oder mehrere hydrogensubstituierte Polysiloxanverbindungen,
Z-B-4) ein Platin-Katalysator,
Z-B-5) optional Füllstoff und
Z-B-6) optional Additive erhalten wird.

**7.** Dentale Schienenanordnung nach einem der vorangehenden Ansprüche, wobei die erste duroplastische Schiene (S-A) durch Polymerisation einer ersten Zusammensetzung (Z-A) umfassend

Z-A-1) in einer Menge von 25 bis 75 Gew.-%, bevorzugt von 40 bis 70 Gew.-%,
Z-A-2) in einer Menge von 1 bis 20 Gew.-%, bevorzugt von 2 bis 15 Gew.-%,
Z-A-3) in einer Menge von 20 bis 60 Gew.-%, bevorzugt von 25 bis 50 Gew.-%,
Z-A-4) in einer Menge von 0,1 bis 5 Gew.-%, bevorzugt von 0,5 bis 3 Gew.-%,
Z-A-5) in einer Menge von 0,01 bis 1 Gew.-%, bevorzugt von 0,01 bis 0,1 Gew.-%,
Z-A-6) in einer Menge von 0 bis 1 Gew.-%, bevorzugt von 0,0001 bis 0,5 Gew.-%, und
Z-A-7) in einer Menge von 0 bis 1 Gew.-%, bevorzugt von 0,01 bis 0,5 Gew.-%,

jeweils bezogen auf die Gesamtmasse der Zusammensetzung Z-A, erhalten wird, und/oder
die zweite Schiene (S-B) durch Additionsvernetzung einer zweiten Zusammensetzung (Z-B) umfassend

Z-B-1) in einer Menge von 10 bis 50 Gew.-%, bevorzugt von 20 bis 40 Gew.-%,
Z-B-2) in einer Menge von 20 bis 60 Gew.-%, bevorzugt von 30 bis 50 Gew.-%,
Z-B-3) in einer Menge von 2 bis 20 Gew.-%, bevorzugt von 2 bis 10 Gew.-%,

Z-B-4) in einer Menge von 0,001 bis 0,5 Gew.-%, bevorzugt von 0,001 bis 0,1 Gew.-%,
Z-B-5) in einer Menge von 0 bis 40 Gew.-%, bevorzugt von 5 bis 25 Gew.-%, und
Z-B-6) in einer Menge von 0 bis 10 Gew.-%, bevorzugt von 0 bis 5 Gew.-%,

jeweils bezogen auf die Gesamtmasse der Zusammensetzung Z-B, erhalten wird.

**8.** Dentale Schienenanordnung nach einem der vorangehenden Ansprüche, wobei die Klebstoffzusammensetzung (Z-C)

Z-C-1) in einer Menge von 50 bis 95 Gew.-%, bevorzugt 80 bis 95 Gew.-%,
Z-C-2) in einer Menge von 1 bis 20 Gew.-%, bevorzugt 2 bis 15 Gew.-% und
Z-C-3) in einer Menge von 1 bis 10 Gew.-%, bevorzugt 1 bis 5 Gew.-%, jeweils bezogen auf die Gesamtmasse der Zusammensetzung Z-C umfasst, oder
Z-C-1) in einer Menge von 50 bis 95 Gew.-%, bevorzugt 70 bis 95 Gew.-%,
Z-C-2) in einer Menge von 1 bis 20 Gew.-%, bevorzugt 2 bis 15 Gew.-%,
Z-C-3) in einer Menge von 1 bis 10 Gew.-%, bevorzugt 1 bis 5 Gew.-% und
Z-C-4) in einer Menge von 0 bis 30 Gew.-%, bevorzugt 0 bis 15 Gew.-%, jeweils bezogen auf die Gesamtmasse der Zusammensetzung Z-C umfasst.

**9.** Dentale Schienenanordnung nach einem der vorangehenden Ansprüche, wobei die Komponente Z-A-1 difunktionelles Urethan(meth)acrylat mit einem Molekulargewicht im Bereich von 400 bis 550 g/mol in einer Menge von 25 bis 100 Gew.-%, vorzugsweise 51 bis 100 Gew.-%, bevorzugt 60 bis 90 Gew.-%, besonders bevorzugt 75 bis 90 Gew.-%, und multifunktionelles, oligomeres Urethan(meth)acrylat mit einem Molekulargewicht > 650 g/mol in einer Menge von 0 bis 75 Gew.-%, vorzugsweise 0 bis 49 Gew.-%, bevorzugt 10 bis 40 Gew.-%, besonders bevorzugt 10 bis 25 Gew.-%, jeweils bezogen auf die Gesamtmasse von Z-A-1, umfasst
und/oder

die Komponente Z-A-2 ausgewählt ist aus der Gruppe bestehend aus 2-Hydroxyethyl(meth)acrylat, 2-Hydroxypropyl(meth)acrylat, 3-Hydroxypropyl-(meth)acrylat, Tetrahydrofurfuryl(meth)acrylat, 4-(Meth)acryloylmorpholin, Cyclohexyl(meth)acrylat, 3,3,5-Trimethylcyclohexyl(meth)acrylat, 4-(1,1-Dimethylethyl)-cyclohexyl(meth)acrylat, Isobornyl(meth)acrylat, (Octahydro-4,7-methano-1H-indenyl)methyl(meth)acrylat, Benzyl(meth)acrylat, 2-Phenoxyethyl(meth)acrylat, 2-Ethoxyethyl(meth)acrylat, 2-(2-Ethoxyethoxy)ethyl(meth)acrylat, 2-[2-(2-Ethoxy-ethoxy)ethoxy]ethyl(meth)acrylat, 2-Methoxyethyl(meth)acrylat, 2-(2-Methoxy-ethoxy)ethyl(meth)acrylat, 2-[2-(2-Methoxyethoxy)ethoxy]ethyl(meth)acrylat, Hexyl-(meth)acrylat, 2-Ethylhexyl(meth)acrylat, Decyl(meth)acrylat, Isodecyl(meth)acrylat, Dodecyl(meth)acrylat, 2-[[(Butylamino)carbonyl]oxy]ethyl(meth)acrylat, 2-Hydroxy-3-(prop-2-enoyloxy)propyl 2-methyl-2-propylhexanoat, und (5-Ethyl-1,3-dioxan-5-yl)methyl(meth)acrylat,
und/oder

die Komponente Z-A-3 ausgewählt ist aus der Gruppe bestehend aus Ethylenglycoldi(meth)acrylat, Diethylenglycoldi(meth)acrylat, Triethylen-glycoldi(meth)acrylat, Tetraethylenglycoldi(meth)acrylat, Polyethylenglycoldi(meth)acrylat, Propylenglycoldi(meth)acrylat, Dipropylenglycoldi(meth)acrylat, Tripropylenglycoldi(meth)acrylat, Tetrapropylenglycoldi(meth)acrylat, Polypropylen-glycoldi(meth)acrylat, 1,4-Butandioldi(meth)acrylat, 1,3-Butandioldi(meth)acrylat, 1,6-Hexandioldi(meth)acrylat, 1,10-Decandioldi(meth)acrylat, 1,12-Dodecandiol-di(meth)acrylat, 2-Hydroxypropyl-1,3-di(meth)acrylat, 3-Hydroxypropyl-1,2-di-(meth)acrylat, Neopentylglycoldi(meth)acrylat, Trimethylolpropantri(meth)acrylat, Pentaerythritoldi(meth)acrylat, Pentaerythritoltri(meth)acrylat, Pentaerythritol-tetra(meth)acrylat, 2,2-Bis[4-[3-(meth)acryloyloxy-2-hydroxypropoxy]phenyl]propan, 2,2-Bis[4-(meth)acryloyloxyphenyl]propan, 2,2-Bis[4-(meth)acryloyloxyethoxy-phenyl]propan, 2,2-Bis[4-(meth)acryloyloxydiethoxyphenyl]propan, 2,2-Bis[4-(meth)acryloyloxytriethoxyphenyl]propan 2,2-Bis[4-(meth)acryloyloxytetraethoxy-phenyl]propan, 2,2-Bis[4-(meth)acryloyloxypentaethoxyphenyl]-propan, 2,2-Bis[4-(meth)acryloyloxydipropoxyphenyl]propan, 2,2-Bis[4-(meth)acryloyloxyethoxy-phenyl]-2-[4-(meth)acryloyloxydiethoxyphenyl]propan, 2-[4-(Meth)acryloyloxydi-ethoxyphenyl]-2-[4-(meth)-acryloyloxytriethoxyphenyl]propan, 2-[4-(Meth)acryloyl-oxydipropoxyphenyl]-2-[4-(meth)acryloyloxytriethoxyphenyl]propan, 2,2-Bis[4-(meth)acryloyloxyisopropoxyphenyl]propan, ethoxyliertes Bisphenol-A-di(methacrylat), propoxyliertes Bisphenol-A-di(meth)acrylat und 3(4),8(9)-Bis-((meth)acryloyloxymethyl)tricyclo[5.2.1.0$^{2,6}$]decan

und/oder

die Komponente Z-A-4 ausgewählt ist aus der Gruppe bestehend aus alpha-Diketonen, Benzoinalkylethern, Thioxanthonen, Benzophenonen, Acetophenonen, Acylphosphinoxiden, und Acylgermanium-Verbindungen, bevorzugt ausgewählt aus der Gruppe bestehend aus 2,4,6-Trimethylbenzoyldiphenylphosphinoxid, Phenylbis(2,4,6-trimethylbenzoyl)phosphinoxid, Ethyl phenyl(2,4,6-trimethylbenzoyl)-phosphinate (CAS 84434-11-7) und (Poly(oxy-1,2-ethanediyl),α,α',α"-1,2,3-propanetriyltris[w-[[phenyl(2,4,6-trimethylbenzoyl)phosphinyl]oxy]-Polymer) (CAS 1834525-17-5),

und/oder

die Komponente Z-A-5 ausgewählt ist aus der Gruppe bestehend aus Hydrochinon, Hydrochinonmonomethylether, 2,6-Di-*tert*.-butyl-4-methylphenol, tert.-Butylhydroxyanisol und 2,2,6,6-Tetramethyl-piperidin-1-oxyl.

**10.** Dentale Schienenanordnung nach einem der vorangehenden Ansprüche, wobei

die Komponente Z-B-1 einen Gehalt an Vinylgruppen von 0,02 bis 0,1 mol/kg aufweist, und/oder
die Komponente Z-B-2 einen Gehalt an Vinylgruppen von 0,02 bis 0,1 mol/kg aufweist, und/oder
die Komponente Z-B-3 einen Gehalt an SiH-Gruppen von 1 bis 5 mol/kg aufweist, und/oder
die Komponente Z-B-3 eine Viskosität von kleiner 300 mPa*s aufweist.

**11.** Dentale Schienenanordnung nach einem der vorangehenden Ansprüche, wobei die Komponente Z-A-1 ein Urethan(meth)acrylat umfasst ausgewählt aus der Gruppe bestehend aus 3,14-Dioxa-4,13-dioxo-5,12-diazahexadecan-1,16-dioxydi(meth)acrylat, 7,7,9-Trimethyl-3,14-dioxa-4,13-dioxo-5,12-diazahexadecan-1,16-dioxydi(meth)acrylat, 7,9,9-Trimethyl-3,14-dioxa-4,13-dioxo-5,12-diazahexa-decan-1,16-dioxydi(meth)acrylat, 1,5,5-Trimethyl-1-[(2-(meth)acryloyloxyethyl)-carbamoylmethyl]-3-(2-(meth)acryloyloxyethyl)carbamoylcyclohexan (CAS 42405-01-6 Methacrylat; CAS 42404-50-2 Acrylat), 1,1'-[Methylenbis(4,1-phenyleniminocarbonyloxy-2, 1-ethandiyl)]bis(meth)acrylat (CAS 51243-61-9 Methacrylat; CAS 69790-08-5 Acrylat) und 1,1'-[Methylenbis(2,1-phenyleniminocarbonyloxy-2,1-ethandiyl)]bis(meth)acrylat.

**12.** Dentale Schienenanordnung nach einem der vorangehenden Ansprüche, wobei die erste duroplastische Schiene (S-A) in generativen Fertigungsverfahren hergestellt wird, vorzugsweise in einem in der ISO/ASTM 52900:2015 unter "VAT Photopolymerization" beschriebenen Verfahren, bevorzugt ausgewählt aus der Gruppe bestehend aus Stereolithographie (SLA) und Digital Light Processing (DLP).

**13.** Verfahren zur Herstellung einer dentalen Schienenanordnung nach einem der vorangehenden Ansprüche, mit den folgenden Schritten

i) Herstellen oder Bereitstellen einer ersten Zusammensetzung (Z-A) umfassend die Bestandteile Z-A-1, Z-A-2, Z-A-3, Z-A-4, Z-A-5, optional Z-A-6 und optional Z-A-7,
ii) Bereitstellen eines ersten Datensatzes (D-A),
iii) Herstellen einer ersten Schiene (S-A) in einer Form entsprechend des ersten Datensatzes (D-A) durch Polymerisation der ersten Zusammensetzung (Z-A),
iv) Herstellen oder Bereitstellen einer Klebstoffzusammensetzung (Z-C) umfassend die Bestandteile Z-C-1, Z-C-2, Z-C-3, und optional Z-C-4,
v) Auftragen der Klebstoffzusammensetzung (Z-C) auf die Innenseite (S-A-IS) der ersten Schiene (S-A),
vi) Herstellen oder Bereitstellen einer zweiten Zusammensetzung (Z-B) umfassend die Bestandteile Z-B-1, Z-B-2, Z-B-3, Z-B-4, optional Z-B-5 und optional Z-B-6,
vii) Auftragen der zweiten Zusammensetzung (Z-B) auf die in Schritt v) mit der Klebstoffzusammensetzung (Z-C) vorbehandelte Innenseite (S-A-IS) der ersten Schiene (S-A),
viii) Aushärten der zweiten Zusammensetzung (Z-B) zur zweiten Schiene (S-B) und
ix) optional Nachbearbeiten der zweiten Schiene (S-B).

**14.** Verfahren nach Anspruch 13 zur Herstellung einer dentalen Schienenanordnung wobei der erste Datensatz (D-A) einen ersten Teildatensatz (D-A-IS) umfasst, der der Innenseite (S-A-IS) der ersten Schiene (S-A) entspricht, und einen zweiten Teildatensatz (D-A-AS) umfasst, der der Außenseite (S-A-AS) der ersten Schiene (S-A) entspricht.

**15.** Verwendung einer dentalen Schienenanordnung, nach einem der Ansprüche 1 bis 12, zur Behandlung von Zahnfehlstellungen, Knirschen, Bruxismus oder Schlafapnoe-Syndrom.

Europäisches Patentamt
European Patent Office
Office européen des brevets

# EUROPÄISCHER RECHERCHENBERICHT

Nummer der Anmeldung
EP 24 17 4278

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | CH 713 017 A1 (COOBX AG [LI])<br>13. April 2018 (2018-04-13)<br>* Absätze [0001], [0005] - [0008], [0025], [0034]; Ansprüche *<br>----- | 1<br>2-15 | INV.<br>C08G18/24<br>C08F290/06<br>C08G18/32<br>C08G18/67<br>C08G18/73<br>C08G18/75<br>C08G18/80<br>C08G18/81<br>A61C7/00<br>C08L33/00<br>C09J133/00<br>C09J143/04 |
| X<br>Y | EP 3 536 276 A1 (ALIGN TECHNOLOGY INC [US]) 11. September 2019 (2019-09-11)<br>* Absätze [0001], [0029], [0042] - [0045], [0106], [0158] - [0159], [0169]; Abbildungen; Beispiele *<br>----- | 1<br>2-15 | |
| Y | US 2020/199346 A1 (RIST KAI [AT])<br>25. Juni 2020 (2020-06-25)<br>* Absätze [0002], [0008] - [0012], [0066] - [0074], [0103], [0151]; Ansprüche; Beispiele 11-14; Tabelle 2 *<br>----- | 5-7,9-15 | |
| Y | US 2004/020597 A1 (HASHIGUCHI MASANAO [JP] ET AL) 5. Februar 2004 (2004-02-05)<br>* Absätze [0001], [0014] - [0025], [0029], [0040], [0071]; Ansprüche; Beispiele; Tabellen *<br>----- | 2-4,8,13 | RECHERCHIERTE SACHGEBIETE (IPC)<br>C08G<br>C08F<br>A61C<br>C08L<br>C09J |

Der vorliegende Recherchenbericht wurde für alle Patentansprüche erstellt

1

| Recherchenort | Abschlußdatum der Recherche | Prüfer |
|---|---|---|
| München | 1. Oktober 2024 | Eigner, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 17 4278

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-10-2024

| Im Recherchenbericht angeführtes Patentdokument | Datum der Veröffentlichung | Mitglied(er) der Patentfamilie | Datum der Veröffentlichung |
|---|---|---|---|
| CH 713017 A1 | 13-04-2018 | CH 713017 A1 | 13-04-2018 |
| | | WO 2018064782 A1 | 12-04-2018 |
| EP 3536276 A1 | 11-09-2019 | AU 2006220803 A1 | 14-09-2006 |
| | | CA 2609151 A1 | 14-09-2006 |
| | | EP 1871274 A2 | 02-01-2008 |
| | | EP 2932935 A1 | 21-10-2015 |
| | | EP 3536276 A1 | 11-09-2019 |
| | | JP 2008531234 A | 14-08-2008 |
| | | WO 2006096558 A2 | 14-09-2006 |
| US 2020199346 A1 | 25-06-2020 | CN 111349196 A | 30-06-2020 |
| | | EP 3669853 A1 | 24-06-2020 |
| | | ES 2913237 T3 | 01-06-2022 |
| | | US 2020199346 A1 | 25-06-2020 |
| | | US 2023357556 A1 | 09-11-2023 |
| US 2004020597 A1 | 05-02-2004 | JP 4398243 B2 | 13-01-2010 |
| | | JP WO2003013443 A1 | 25-11-2004 |
| | | US 2004020597 A1 | 05-02-2004 |
| | | WO 03013443 A1 | 20-02-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3768164 A
- US 4798534 A
- US 5692894 A
- US 20050100853 A1
- WO 2022090940 A1
- US 5103838 A
- US 20010051256 A1
- US 20090298006 A1
- US 20130302742 A1
- US 20160228215 A1
- US 20200237478 A1
- US 20200237480 A1
- US 20200290262 A1
- US 20210077225 A1
- US 20210137642 A1
- US 20210137643 A1
- EP 3536276 A1
- US 20200199268 A1
- US 20200199346 A1
- US 20220041777 A1


### In der Beschreibung aufgeführte Nicht-Patentliteratur


- *CHEMICAL ABSTRACTS,* 42405-01-6
- *CHEMICAL ABSTRACTS,* 42404-50-2
- *CHEMICAL ABSTRACTS,* 51243-61-9
- *CHEMICAL ABSTRACTS,* 69790-08-5
- *CHEMICAL ABSTRACTS,* 84434-11-7
- *CHEMICAL ABSTRACTS,* 1834525-17-5
- *CHEMICAL ABSTRACTS,* 103597-45-1
- *CHEMICAL ABSTRACTS,* 131-55-5
- *CHEMICAL ABSTRACTS,* 3896-11-5
- *CHEMICAL ABSTRACTS,* 18600-59-4
- *CHEMICAL ABSTRACTS,* 2725-22-6
- *CHEMICAL ABSTRACTS,* 2440-22-4
- *CHEMICAL ABSTRACTS,* 23328-53-2
- *CHEMICAL ABSTRACTS,* 3864-99-1
- *CHEMICAL ABSTRACTS,* 131-53-3
- *CHEMICAL ABSTRACTS,* 131-54-4
- *CHEMICAL ABSTRACTS,* 13373-29-0
- *CHEMICAL ABSTRACTS,* 41556-26-7
- *CHEMICAL ABSTRACTS,* 82919-37-7
- *CHEMICAL ABSTRACTS,* 129757-67-1
- *CHEMICAL ABSTRACTS,* 63843-89-0
- *CHEMICAL ABSTRACTS,* 32052-51-0
- *CHEMICAL ABSTRACTS,* 4098-71-9
- *CHEMICAL ABSTRACTS,* 77-58-7
- *CHEMICAL ABSTRACTS,* 128-37-0
- *CHEMICAL ABSTRACTS,* 72869-86-4
- *CHEMICAL ABSTRACTS,* 5888-33-5
- *CHEMICAL ABSTRACTS,* 27813-02-1
- *CHEMICAL ABSTRACTS,* 109-16-0
- *CHEMICAL ABSTRACTS,* 43048-08-4
- *CHEMICAL ABSTRACTS,* 75980-60-8